Europäisches Patentamt

European Patent Office

Office européen des brevets

(11) Veröffentlichungsnummer: **0 376 102**
**A2**

## (12) EUROPÄISCHE PATENTANMELDUNG

(21) Anmeldenummer: 89123318.1

(51) Int. Cl.⁵: **B23K 37/02**

(22) Anmeldetag: 16.12.89

(30) Priorität: 24.12.88 DE 3843897
10.03.89 DE 3907803

(43) Veröffentlichungstag der Anmeldung:
04.07.90 Patentblatt 90/27

(84) Benannte Vertragsstaaten:
AT CH DE FR LI

(71) Anmelder: ROTH WERKE GMBH
Postfach 60
D-3563 Dautphetal 2(DE)

(72) Erfinder: Roth, Manfred, Dipl.-Volkswirt
Steinweg 5
D-3563 Dautphetal 5 Mornshausen(DE)

(74) Vertreter: Missling, Arne, Dipl.-Ing.
Patentanwalt Bismarckstrasse 43
D-6300 Giessen(DE)

(54) **Verfahren und Vorrichtung zum Schneiden einer Wanne.**

(57) Die Erfindung betrifft ein Verfahren und eine Vorrichtung zum Schneiden einer Wanne. Um die Ausbildung der Schnittlinie zu optimieren und die Schnittgeschwindigkeit zu erhöhen, ist erfindungsgemäß vorgesehen, daß eine Schneideinrichtung (1) an einem Wagen (4) gelagert ist, welcher entlang einer Führungsschiene (2) bewegbar ist. Die Führungsschiene (2) ist auf eine Wanne (5), welche zertrennt werden soll, aufsetzbar. Der Wagen (4) weist einen Antrieb auf und gestattet es, die Schneideinrichtung (1) in exakter Weise mit größtmöglicher Vorschubgeschwindigkeit zu bewegen.

FIG.1

## Verfahren und Vorrichtung zum Schneiden einer Wanne

Die Erfindung bezieht sich auf ein Verfahren zum Schneiden einer Wanne für den Austausch der Wanne, insbesondere einer Badewanne oder einer Duschwanne mittels einer vibrationsfreien Schneideinrichtung, sowie auf eine Vorrichtung zum Schneiden einer Wanne.

Bei der Renovierung und/oder Umgestaltung von Bädern ist es in vielen Fällen wünschenswert, auch die Badewanne bzw. Duschwanne auszutauschen, sei es, weil die alte Wanne verschlissen ist oder weil eine neue Farbe oder Form der Wanne gewünscht wird.

Aus dem Stand der Technik ist es bekannt, die alte Wanne am Stück auszubauen, wobei Wand- und Schürzenbereiche mit ihren Fliesen zumindest teilweise zerstört werden.

Um zu vermeiden, daß die Kachelung des Bades übermäßig in Mitleidenschaft gezogen wird, wurde vorgeschlagen, die alte Wanne in transportable Stücke zu zersägen, um diese ohne größere Beschädigungen der restlichen Einbauten eines Raumes entnehmen zu können. Aus der DE-PS 26 56 434 ist ein Verfahren bekannt, bei welchem die alte Badewanne nach Entfernen des den Wannenrand festlegenden Mörtels zerschnitten und aus der stehenbleibenden Verkleidung herausgenommen wird. Dieses Verfahren ist sehr zeitaufwendig und erfordert größte Sorgfalt, da bei dem mechanischem Vorgang des Lockerns des Wannenrandes aus seiner Mörtelverbindung in den gefliesten Bereichen die Gefahr des Zerstörens der Fliesen besteht. Das Entfernen des den Wannenrand festlegenden Mörtels muß nach der Lehre dieses Patentes vor dem Zerschneiden der Wanne geschehen, weil die nach dem Stand der Technik bekannten Schneidverfahren wie Metall-Stichsäge oder Winkelschleifer solche Vibrationen erzeugen, daß ohne vorhergehenden Lockern der Wanne die Gefahr des Herausbrechens von Kacheln besteht. Weiterhin erweist es sich als nachteilig, daß das Zertrennen der alten Wann in mehrere Stücke zusätzliche Zeit erfordert. Es ist kostenintensiv und erzeugt eine erhebliche Menge an Schmutz. Insbesondere letzteres ist bei einem Austausch einer Wanne in einer bewohnten Wohnung sehr unerfreulich. Weiterhin führen die Trennvorgänge, welche beispielsweise durch Stichsägen oder Trennschleifscheiben erfolgen, zu einer erheblichen Geräuschentwicklung.

Die DE-OS 33 11 125 beschreibt ein Verfahren zum Einbau von Wannen, bei welchem die alte Wanne so zerteilt wird, daß der Rand stehen bleibt, das heißt mit dem Unterbau verbunden bleibt. Die neue Wanne wird gemäß die sem Verfahren auf den Rand der alten Wanne aufgesetzt und mit diesem verbunden, nachdem das Mittelteil der alten Wanne entfernt wurde. Bei diesem Verfahren erweist es sich als nachteilig, daß die neue Wanne breitere Ränder haben muß als die alte Wanne, so daß die neue Wanne kleinere Innenmaße als die alte Wanne hat.

Alle bisherigen Trennvorgänge an alten Wannen werden mittels Trennscheibe (z.B. mit Einhand-Winkelschleifer) oder Sägen (z.B. Sticksäge) durchgeführt. Es handelt sich um mechanische Trennvorgänge die mit Vibration, Geräuschen und körperlicher Beanspruchung verbunden sind. Vibrationen bergen die Gefahr der Beschädigung von Kachel- und Mörtelbereichen, Geräusche beeinträchtigen die Monteure und sonstige sich im Haus befindliche Personen, die körperliche Beanspruchung durch Kraftanstrengung beim Führen, Staubentwicklung, abplatzender Emailleteile, Splitter der Wanne und des Trennwerkzeuges (so z.B. Trennscheiben und Sägeblätter) verursachen eine zusätzliche Beeinträchtigung des Monteurs.

Bei derartigen Schneidevorgängen ist zu beachten, daß die Kachelung oder Fliesung des Bades nicht in Mitleidenschaft gezogen wird und daß insbesondere dann, wenn der Rand der alten Badewanne als Auflager für die neue Wanne erhalten bleiben soll, die Vermauerung oder Vermörtelung nicht beschädigt wird.

Bei den bisher bekannten Schneidverfahren ist es üblich, die Schneideinrichtung von Hand entlang der jeweiligen Schnittkante zu führen. Dies bringt weiter den Nachteil mit sich, daß keine optimale Schnittgeschwindigkeit erzielbar ist, da die Bedienungsperson zum einen die Vorschubgeschwindigkeit der Schneidein richtung nur gefühlsmäßig bestimmen kann und zum anderen insbesondere bei Gußwannen, deren Dicke bis 16 mm betragen kann, die Schneideinrichtung während der langen Schneidzeit nicht so präzise führen kann, daß ohne seitliche Abweichungen eine kürzestmögliche Schnittlinie erzeugt wird. Die seitlichen Abweichungen führen zu einer ungewollten Verbreiterung des Schneidspaltes und damit zu einer erheblichen Erhöhung der erforderlichen Zeit. Ein weiterer Nachteil der manuellen Führung einer Schneideinrichtung liegt darin, daß es vielfach nicht möglich ist, präzise Schnittkanten zu erzeugen, da die Bedienungsperson, insbesondere bei einem Längsschnitt an einer Wanne ihren Standort mehrfach verändern und die Schneideinrichtung nachsetzen muß.

Der Erfindung liegt die Aufgabe zugrunde, ein Verfahren und eine Vorrichtung der eingangs genannten Art zu schaffen, welche keine wesentliche Beeinträchtigung im Hinblick auf Staub- und Lärmentwicklung beim Austausch von Wannen mit sich bringen, und welche zum anderen bei einfacher Ausgestaltung eine Optimierung des Schneidvorganges, insbesondere eine Verkürzung der Schneidzeit und eine Präzisierung der Trennfuge ermöglichen.

Hinsichtlich des Verfahrens wird die Erfindung zum einen dadurch gelöst, daß die Wannen mittels eines vibrationsfreien Trennverfahrens geschnitten werden, insbesondere durch ein Plasma- oder Laserschneidverfahren, und zum anderen dadurch, daß die Schneideinrichtung entlang einer Führungsschiene mittels eines Antriebs bewegt wird.

Das erfindungsgemäße Verfahren zeichnet sich durch eine Reihe erheblicher Vorteile aus. Durch die Verwendung eines vibrationsfreien Schneidverfahrens wird eine er hebliche Reduzierung von Lärm- und Staubentwicklung erhalten. Da gemäß einem weiteren Vorschlag die Schneideinrichtung entlang der Führungsschiene bewegt wird, ist ein exakter, geradliniger Schnitt gewährleistet, Abweichungen, insbesondere in seitlicher Richtung, welche zu einer Erhöhung der Schneidzeit oder zu einer Verbreiterung der Trennfuge führen würden, sind ausgeschlossen. Da weiterhin erfindungsgemäß die Schneideinrichtung mittels eines Antriebs bewegt wird, ist es möglich, jeweils eine Vorschub- oder Schnittgeschwindigkeit zu wählen, welche in optimaler Weise an das Material und die Dimensionierung der zu schneidenden Wanne angepaßt ist. Während beispielsweise beim Schneiden einer Gußbadewanne manuell eine Schnittgeschwindigkeit von 81 mm/s erzielbar ist, kann erfindungsgemäß die Schnittgeschwindigkeit 200 bis 250 mm/min betragen. Dies wird erfindungsgemäß dadurch erreicht, daß ein geradliniger, sehr schmaler Schneidspalt erzeugt, so daß die zur Verfügung stehende Energie in optimaler Weise in Längsrichtung des Schneidspaltes aufgebracht werden kann. Da erfindungsgemäß die Schneideinrichtung entlang der Führungsschiene mittels eines Antriebs bewegt wird, sind über die gesamte Schnittlänge, welche in Längsrichtung der Wanne erhebliche Ausmessungen haben kann, gleiche Schnittbedingungen gewährleistet. Dies führt auch zu einer saubereren Ausbildung der Schnittkante an dem zu verbleibenden Randbereich der alten Wanne.

In günstiger Weise wird bei dem erfindungsgemäßen Verfahren eine Plasma-Schneideinrichtung eingesetzt.

Hinsichtlich der Vorrichtung wird die Aufgabe erfindungsgemäß dadurch gelöst, daß die Schneideinrichtung an einer schwenkbaren Halterung gelagert ist, welche an einem Wagen angeordnet ist, welcher wiederum an zumin dest einer auf die Wanne aufsetzbaren Führungsschiene geführt ist. Diese Ausgestaltung zeichnet sich durch ein hohes Maß an Einfachheit und Robustheit aus und ermöglicht es, an verschiedensten Wannenformen und Wannenbauarten verwendet zu werden. Hierzu ist es lediglich erforderlich, die Größe und Anordnung der Führungsschiene entsprechend auszuwählen. Weiterhin kann die erfindungsgemäße Vorrichtung an verschiedensten Seiten einer Wanne aufgesetzt werden, so daß ein Schnitt entlang des gesamten Wannenrandes möglich ist.

Bevorzugterweise ist der Wagen selbst fahrend ausgebildet, da in diesem Falle die Schiene nicht mit zusätzlichen Antriebseinrichtungen versehen werden muß. Es ist somit möglich, einfach ausgestaltete und robust ausgebildete Schienen zu verwenden.

Um einen Schnitt auch im Eckenbereich des Wannenrandes zu ermöglichen und um den Wagen universell einsetzen zu können, erweist es sich als besonders vorteilhaft, wenn die Halterung einen um eine vertikale Achse verschwenkbaren Arm umfaßt, an dessen freiem Ende die Schneideinrichtung gehaltert ist. Bevorzugterweise ist der Arm um einen Schwenkwinkel von 360° bewegbar. Der Wagen kann somit in beliebiger Richtung auf die Schiene aufgesetzt werden, durch die Verschwenkung des Armes ist es möglich, die Lage der Schneideinrichtung exakt einzustellen.

Als besonders vorteilhaft hat es sich herausgestellt, den Arm mehrteilig auszubilden und in diesen Gelenke einzufügen, so daß der Schneidkopf immer parallel zu den geneigten Badewannenflächen einstellbar ist. Vorteilhaft wird der Arm verlängerbar ausgebildet, wobei die zwischen den Gelenken angeordneten Teilabschnitte des Armes vorteilhaft teleskopisch ausgebildet werden können. Des weiteren hat es sich als vorteilhaft herausgestellt, den Schneidkopf frei drehbar an dem Arm zu befestigen, so daß dieser seine Lage zur Badewannenfläche aufgrund der Neigung durch die Schwerkraft selbständig einnimmt. Der für das Schneiden der Badewanne erforderliche Abstand des Schneidkopfes kann durch geeignete, am Schneidkopf angeordnete Abstandselemente erhalten werden.

In einer weiteren, besonders günstigen Ausgestaltung der Erfindung ist vorgesehen, daß die Führungsschiene mittels Saugmitteln an der Wanne befestigbar ist. Diese können in Form von Saugfüßen ausgestaltet sein, welche ein Aufsetzen auf die alte Wanne oder auf die Kacheln oder Fliesen so ermöglichen, daß eine Beschädigung ausgeschlossen ist. Um die Führungsschiene an die jeweilige Abmessung der Wanne anzupassen, sind die Saugmittel bevorzugterweise relativ zu der Führungsschiene versetzbar.

Es kann sich weiterhin als vorteilhaft erweisen, wenn die Führungsschiene teleskopartig längenveränderbar ist, da diese dann sowohl längs als auch quer an der Wanne befestigbar ist.

Die Schneideinrichtung ist, wie bereits erwähnt, in besonders günstiger Weise in Form einer Plasma-Schneideinrichtung ausgebildet. Dabei erweist es sich weiterhin als vorteilhaft, wenn an einem Brennerkopf ein Hitzeschutzschild gelagert ist, welches im montierten Zustand mit einem Sicherheitsschalter zur Betätigung der Schneideinrichtung in Betriebsverbindung steht. Der Sicherheitsschalter ist so angeordnet, daß ein Zünden der Schneideinrichtung nur dann möglich ist, wenn das Hitzeschutzschild in korrekter Weise montiert ist. Durch diese Ausgestaltung wird verhindert, daß die Schneideinrichtung während des Schnittvorganges, insbesondere durch Wärmeentwicklung und Funkenflug die Fliesung oder Kachelung des Bades beschädigt.

Erfindungsgemäß kann es weiterhin günstig sein, den Brennerkopf und/oder den Hitzeschutzschild mittels einer Abschirmhaube abzudecken. Diese kann zum einen die sich beim Schneidvorgang entwickelte Strahlung abschirmen, zum anderen werden Verletzungen des Bedienungspersonals durch Berührungen des Hitzeschutzschildes vermieden. Weiterhin können zusätzlich auftretende Funken abgefangen werden. Zusätzlich ist es möglich, am Bereich des Hitzeschutzschildes eine Absaugeinrichtung anzuordnen, um insbesondere in schlecht belüfteten Bädern die beim Schneidvorgang auftretenden Gase und Staubpartikel aufzufangen.

Erfindungsgemäß ist es besonders günstig, wenn der Fließdruck in einem Bereich von 2 bis 4 bar eingestellt ist. Dieser Wert des Fließdruckes führt zu erheblichen Verlängerungen der Standzeiten der Schneiddüse, der Elektrode und des Hitzeschutzschildes.

In einer besonders günstigen Weiterbildung der Erfindung ist vorgesehen, daß die Schneideinrichtung mit einer Netzkompensation zum Anschluß an eine 220 V-Stromversorgung versehen ist. Bei den bekannten Schneideinrichtungen ist stets ein 380 V-Stromanschluß erforderlich, so daß die üblicherweise in einem Haushalt vorhandenen Steckdosen nicht verwendbar sind. Die Netzkompensation erfolgt durch eine Senkung des Blindstromes unter Verwendung einer Drosselspule und eines Kondensators.

Im folgenden wird die Erfindung anhand eines Ausführungsbeispiels in Verbindung mit der Zeichnung beschrieben. Dabei zeigt:

Fig. 1 eine schematische Seitenansicht eines Ausführungsbeispiels der erfindungsgemäßen Vorrichtung;

Fig. 2 eine Draufsicht auf die Anordnung gemäß Fig. 1;

Fig. 3 eine weitere Montagestellung der erfindungsgemäßen Führungsschiene:

Fig. 4 eine Draufsicht auf die Fig. 3 gezeigte Anordnung;

Fig. 5 eine schematische Frontansicht der erfindungsgemäßen Führungsschiene;

Fig. 6 eine Draufsicht auf den erfindungsgemäßen Wagen und die schwenkbare Halterung;

Fig. 7 eine schematische Seitenansicht der Schneideinrichtung mit Hitzeschutzschild und Abschirmhaube;

Fig. 8 eine Draufsicht auf eine weitere Ausführungsform einer erfindungsgemäßen Vorrichtung;

Fig. 9 eine Seitenansicht der Vorrichtung, teilweise im Schnitt;

Fig. 10 eine Seitenansicht auf den Schneidkopf 1 mit seiner Halterung;

Fig. 11 eine weitere Ausführungsform einer Vorrichtung mit einem mehrfach verstellbaren Arm zur Bearbeitung des Wannenbodens;

Fig. 12 die Buchse für die Halterung der Schneideinrichtung im Schnitt und

Fig. 13 eine Draufsicht auf die Buchse für die Halterung der Schneideinrichtung.

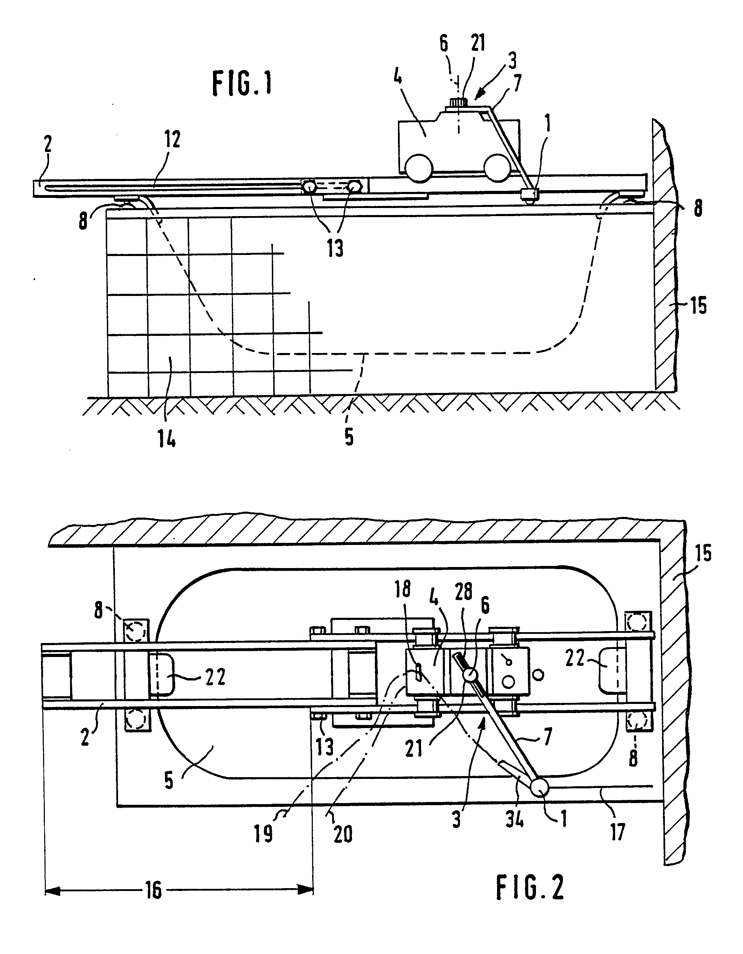

In den Fig. 1 und 2 ist die erfindungsgemäße Vorrichtung in einer Anordnung dargestellt, in welcher ein Schnitt entlang des Längsrandes einer Wanne 5 erfolgen soll. Die Anordnung umfaßt eine Schneideinrichtung 1 in Form einer Plasmaschneideinrichtung, wobei die Schneideinrichtung 1 in den Fig. 1 und 2 nur schematisch dargestellt ist. Die Schneideinrichtung 1 ist mittels einer schwenkbaren Halterung 3 an einem Wagen 4 gelagert, welcher längs einer Führungsschiene 2 bewegbar ist. Erfindungsgemäß ist der Wagen 4 mit einem Antrieb versehen, so daß dieser in konstanter Geschwindigkeit längs der Führungsschiene 2 verfahrbar ist.

Bei dem gezeigten Ausführungsbeispiel ist die Führungsschiene 2 teleskopartig verlängerbar und umfaßt zwei im einzelnen nicht bezeichnete Schienenbereiche, welche mittels eines Langlochs und Feststelleinrichtungen 13 in einer vorgegebenen Länge zueinander fixierbar sind.

Bei dem gezeigten Ausführungsbeispiel ist die Wanne 5 an zwei Seiten durch einen mit einer Kachelung 14 versehenen Unterbau abgestützt, während die anderen beiden Seiten der Wanne 5 an eine Wand 15 angrenzen. Bei dem gezeigten Ausführungsbeispiel ist der Wagen 4 bereits um eine bestimmte Weglänge nach links verschoben worden, so daß bereits ein Schnitt 17 erzeugt wurde. Für die restliche Bewegung des Wagens 4 steht der Verschiebeweg 16 zur Verfügung.

Erfindungsgemäß weist der Wagen 4 an seiner Oberseite zumindest einen Schlauchhalter 18 auf, durch welchen ein Brennerschlauch und ein Kabel 19 führbar sind. In Fig. 2 ist weiterhin ein elektrischer Anschluß 20 für den Antrieb des Wagens 4 dargestellt.

Die schwenkbare Halterung 3 umfaßt einen Arm 7, welcher um eine vertikale Achse 6 relativ zu dem Wagen 4 verschwenkbar ist. Der Arm 7 kann an seinem freien Ende mit einem Langloch versehen sein, um zusätzlich eine seitliche Einstellung zu ermöglichen. An dem Wagen 4 ist eine Feststelleinrichtung 21 angeordnet, um den Arm 7 in der voreingestellten Stellung zu haltern.

An der Führungsschiene 2 sind weiterhin Saugmittel 8 in Form von Saugfüßen vorgesehen, welche ein Aufsitzen auf die Wanne ermöglichen. Weiterhin kann im Bereich der Saugmittel 8 eine Konturplatte 22 an der Führungsschiene 2 befestigt sein, um zusätzlich ein Verklemmen und ein exaktes Aufsitzen auf der Wanne zu erreichen.

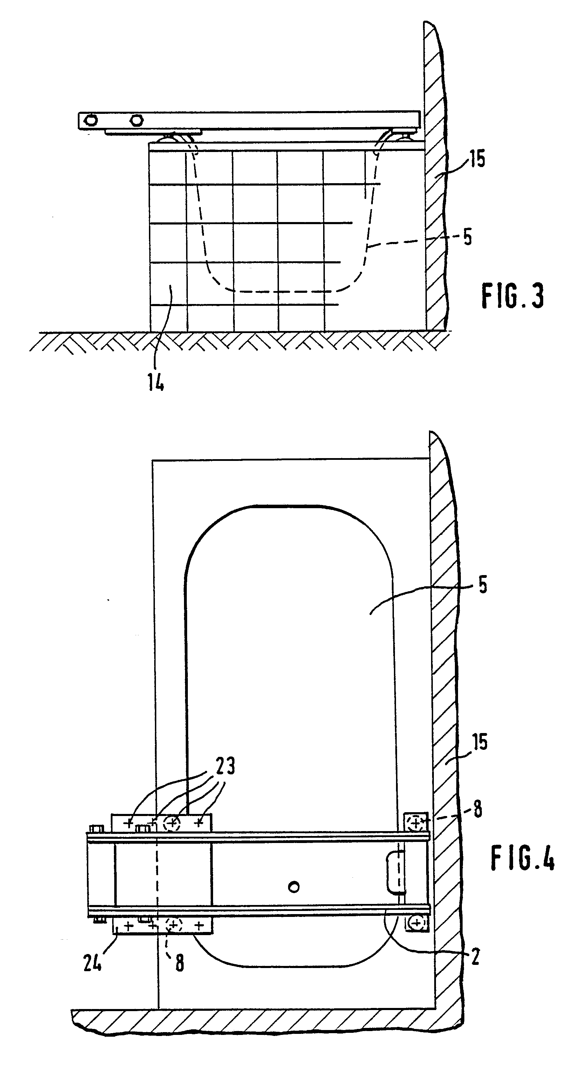

Die Fig. 3 und 4 zeigen eine Anordnung bei welcher die Führungsschiene 2 teleskopartig ineinandergeschoben ist, um in Querrichtung auf die Wanne 5 aufgesetzt zu werden.

Die Führungsschiene 2 ist an einem Ende mit einer Lagerplatte 24 versehen, an welcher mehrere Anschlußstellen 23 für die Saugmittel 8 ausgebildet sind, so daß eine universelle Anpassung an verschiedenste Wannengrößen möglich ist. Bei dem in den Fig. 3 und 4 gezeigten Ausführungsbeispiel ist die teleskopartige Führungsschiene auf eine kürzestmögliche Länge eingestellt.

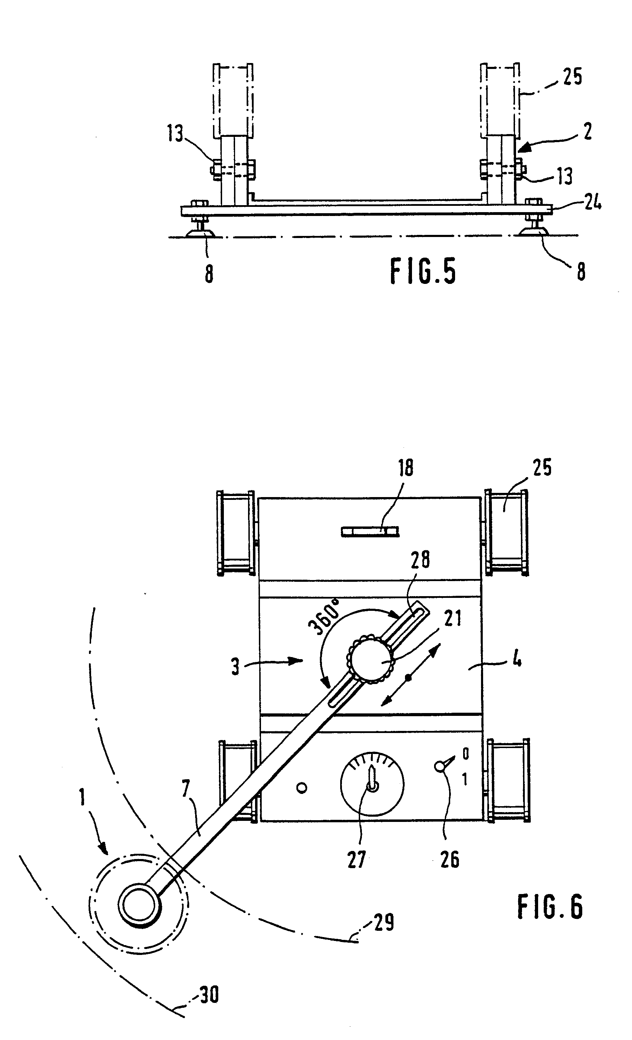

Die Fig. 5 zeigt eine stirnseitige Ansicht auf das in den Fig. 3 und 4 links abgebildete Ende der Führungsschiene 2. Dabei sind insbesondere die Lagerplatte 24 und die Saugmittel 8 erkennbar. Weiterhin ist die doppelte Ausgestaltung der Führungsschiene 2 in Form teleskopartige zueinander verschiebbarer Schienenteile dargestellt. Die Feststelleinrichtungen 13 können in Form von Schrauben und Flügelmuttern ausgebildet sein.

Eine Draufsicht auf den erfindungsgemäßen Wagen 4 zeigt die Fig. 6. Der Wagen 4 ist mit vier Rädern 25 versehen und weist zusätzlich zu der schwenkbaren Halterung 3, welche eine Verschwenkung des Armes 7 um 360° ermöglicht, einen Ein-Aus-Schalter 26 sowie eine Geschwindigkeitseinstellung 27 auf.

Das Langloch 28 des Armes 7 ermöglicht eine Verschiebung des Armes 7 in Längsrichtung, so daß ein minimaler Radius 29 und ein maximaler Radius 30 erzielbar sind. Es ist somit auch möglich, an den Eckenbereichen der Wanne 5 einen kreisbogenförmigen Schnitt zu erzeugen.

Um eine sichere Führung der Räder 25 auf der Führungsschiene zu gewährleisten, weist das Rad 25 an beiden Seiten einen Spurkranz auf.

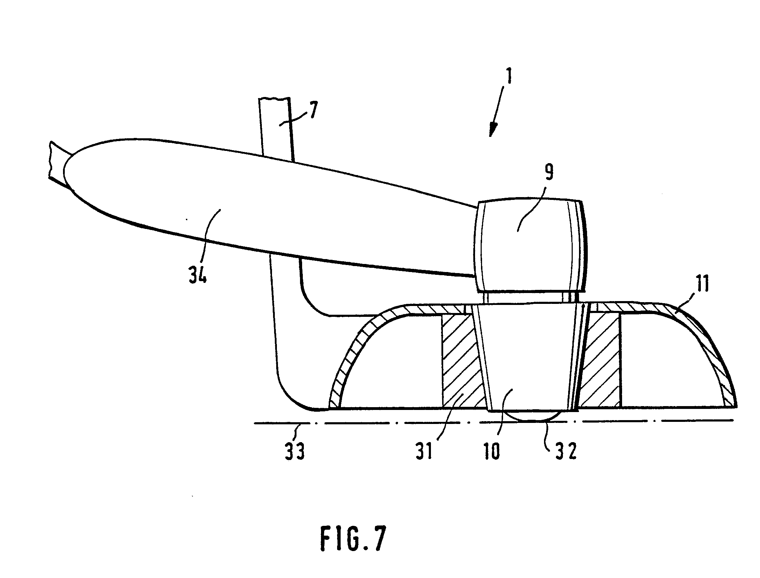

In Fig. 7 ist in schematischer Weise die erfindungsgemäße Schneideinrichtung, welche in Form einer Plasmaschneideinrichtung ausgebildet ist, dargestellt. An dem freien Ende des Armes 7 ist ein Haltering 31 ausgebildet, in welchen ein Hitzeschutzschild 10 einsteckbar ist, welches mit einem Brennerkopf 9 verbunden ist. Der Arm 7 wird so einjustiert, daß eine Brennerdüse 32 auf der Oberfläche 33 der Wanne 5 aufsetzbar ist, ohne daß der Hitzeschutzschild 10 oder die Halterung 31 die Wannenoberfläche 33 berührt. Weiterhin ist eine Abschirmhaube 11 vorgesehen, welche an dem Arm 7 bzw. der Halterung 31 befestigt ist und zur zusätzlichen Abschirmung dient. Der Hitzeschild 10 ist in der in Fig. 7 gezeigten montierten Stellung mit einem Schalter in Kontakt, welcher die Schneideinrichtung ausschaltet, sobald der Hitzeschild 10 von dem Brennerkopf 9 entfernt wird. Mit der Bezugsziffer 34 ist ein Griff der Schneideinrichtung 1 bezeichnet.

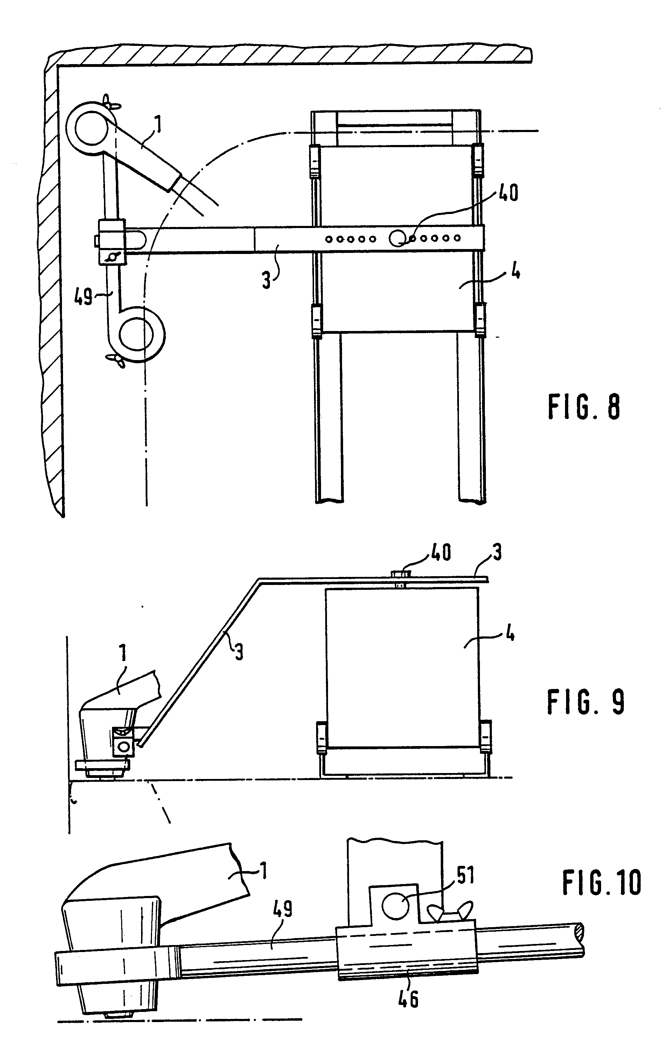

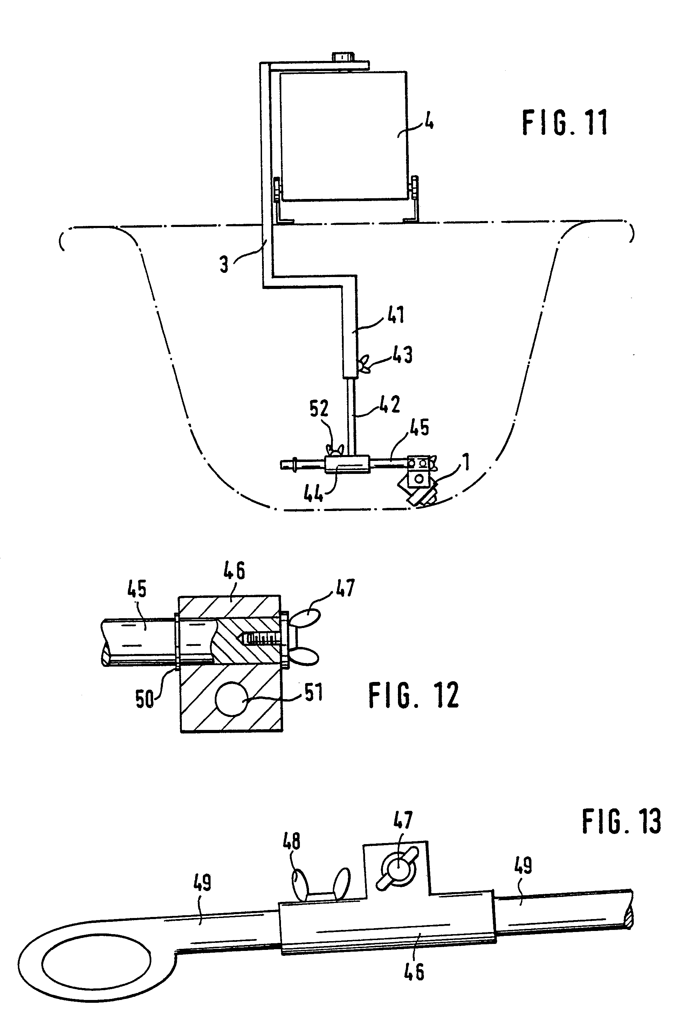

Vorteilhaft ist der Arm 3 mehrteilig ausgebildet, wie dies in den Figuren 7 bis 13 dargestellt ist. Bei den Figuren 8 bis 10 ist der Arm auf der Oberseite des Wagens 4 angeordnet und so gekrümmt, daß dieser seitlich des Wagens den Rand der Wanne bearbeiten kann. Bei den Ausführungsbeispielen nach den Figuren 11 bis 13 ist der Arm 3 mehrfach gekrümmt, so daß auch die Bereiche unterhalb des Wagens 4 bearbeitet werden können, wie dies insbesondere Figur 11 zeigt.

Der Arm ist zur Verstellung und zur Anpassung des Schneidkopfes an die jeweilige Fläche der Wannenwand um zumindest fünf Achsen drehbar ausgebildet und in der Länge und Breite verstellbar, so daß der Schneidkopf 1 in praktisch jeder Wannenwandneigung mittels des Wagens 4 verfahrbar ist.

Die Anpassung des Schneidkopfes 1 an die Wannenwand wird vorteilhaft dadurch erreicht, daß der Schneidkopf 1 in einer Halterung 46 gelagert ist, die frei drehbar um den Arm 45 ausgebildet ist, wodurch eine automatische Anpassung des Schneidkopfes 1 an gekrümmte Flächen der Wanne möglich ist.

Die Erfindung ist nicht auf die gezeigten Ausführungsbeispiele beschränkt, vielmehr ergeben sich für den Fachmann im Rahmen der Erfindung vielfältige Abwandlungsmöglichkeiten.

## Ansprüche

1. Verfahren für das Zer- bzw. Beschneiden von Wannen, insbesondere von Badewannen oder Duschwannen, dadurch gekennzeichnet, daß die Wannen mittels eines vibrationsfreien Trennverfahrens geschnitten werden, insbesondere durch ein Plasma- oder Laserschneidverfahren.

2. Verfahren nach Anspruch 1, dadurch gekennzeichnet, daß eine Schneideinrichtung entlang einer zur Wanne ausgerichteten Führungsschiene mittels eines Antriebs bewegt wird.

3. Verfahren nach Anspruch 1 oder 2, dadurch gekennzeichnet, daß die Schneideinrichtung (1) mit maximaler Schnittgeschwindigkeit bewegt wird.

4. Vorrichtung zum Schneiden von Wannen, insbesondere von Badewannen oder Duschwannen, insbesondere zur Verwendung bei dem Verfahren nach einem der Ansprüche 1 bis 3, mit einer Schneideinrichtung (1), dadurch gekennzeichnet, daß die Schneideinrichtung (1) an einer schwenkbaren Halterung (3) gelagert ist, welche an einem Wagen (4) angeordnet ist, welcher an zumindest einer auf die Wanne (5) aufsetzbaren Führungsschiene (2) geführt ist.

5. Vorrichtung nach Anspruch 4, dadurch gekennzeichnet, daß der "Wagen (4) selbstfahrend ausgebildet ist.

6. Vorrichtung nach Anspruch 4 oder 5, dadurch gekennzeichnet, daß die Halterung (3) einen um eine vertikale Achse (6) verschwenkbaren Arm (7) umfaßt, an dessen freiem Ende die Schneideinrichtung (1) gehaltert ist.

7. Vorrichtung nach Anspruch 6, dadurch gekennzeichnet, daß der Arm (7) um einen Schwenkwinkel von 360o bewegbar ist.

8. Vorrichtung nach einem der Ansprüche 4 bis 7, dadurch gekennzeichnet, daß die Führungsschiene (2) mittels Saugmitteln (8) an der Wanne (5) befestigbar ist.

9. Vorrichtung nach Anspruch 8, dadurch gekennzeichnet, daß die Saugmittel (8) zur Anpassung an die jeweilige Abmessung der Wanne (5) relativ zu der Führungsschiene (2) versetzbar sind.

10. Vorrichtung nach einem der Ansprüche 4 bis 9, dadurch gekennzeichnet, daß die Führungsschiene (2) teleskopartig längenveränderbar ist.

11. Vorrichtung nach einem der Ansprüche 4 bis 10, dadurch gekennzeichnet, daß die Schneideinrichtung (1) in Form einer Plasma-Schneideinrichtung ausgebildet ist.

12. Vorrichtung nach Anspruch 11, dadurch gekennzeichnet, daß an einem Brennerkopf (9) ein Hitzeschutzschild (10) gelagert ist, welches im montierten Zustand mit einem Sicherheitsschalter zur Betätigung der Schneideinrichtung (1) in Betriebsverbindung steht.

13. Vorrichtung nach Anspruch 11 oder 12, dadurch gekennzeichnet, daß der Brennerkopf (9) und/oder der Hitzeschutzschild (10) mittels einer Abschirmhaube (11) abgedeckt sind.

14. Vorrichtung nach einem der Ansprüche 11 bis 13, dadurch gekennzeichnet, daß ein Fließdruck von 2 bis 4 bar eingestellt wird.

15. Vorrichtung nach einem der Ansprüche 11 bis 14, dadurch gekennzeichnet, daß die Schneideinrichtung (1) mit einer Netzkompensation zum Anschluß an einen 220 V-Stromversorgung versehen ist.

16. Vorrichtung nach einem der Ansprüche 11 bis 15, dadurch gekennzeichnet, daß die Schneideinrichtung (1) mit einem Hochfrequenzgerät versehen ist, das eine freie Zündung des Lichtbogens gestattet und die leichtere Durchdringung der Emaillierung der Wanne gewährleistet.

17. Vorrichtung nach einem der Ansprüche 11 bis 16, dadurch gekennzeichnet, daß der Arm mehrere Gelenke aufweist, die eine Verstellung des Schneidkopfes in allen Raumachsen derart zulassen, daß der Schneidkopf immer parallel zur zu schneidenden Fläche ausgerichtet ist.

18. Vorrichtung nach einem der vorhergehenden Ansprüche, dadurch gekennzeichnet, daß der Arm auf der Unter-oder Oberseite des Wagens (4) befestigbar ist.

19. Vorrichtung nach einem der vorhergehenden Ansprüche, dadurch gekennzeichnet, daß der Arm mehrere Befestigungsstellen zur wahlweisen Befestigung am Wagen (4) aufweist.

20. Vorrichtung nach einem der vorhergehenden Ansprüche, dadurch gekennzeichnet, daß der Arm (3) um seine Befestigungsstellen (40) am Wagen (4) schwenkbar angeordnet ist.

21. Vorrichtung nach einem der vorhergehenden Ansprüche, dadurch gekennzeichnet, daß der Arm (3) zwei teleskopartig ineinanderschiebbare Teile (41, 42) aufweist, die gegeneinander mit einer Stellschraube (43) festlegbar sind.

22. Vorrichtung nach einem der vorhergehenden Ansprüche, dadurch gekennzeichnet, daß die Teile (41 und 42) gegeneinander verdrehbar ausgebildet sind.

23. Vorrichtung nach einem der vorhergehenden Ansprüche, dadurch gekennzeichnet, daß am Ende des Teiles (42) des Armes (3) quer zur Achse des Teiles (42) eine Buchse 44 befestigt ist, die einen Teil (45) des Armes (3) aufnimmt.

24. Vorrichtung nach einem der vorhergehenden Ansprüche, dadurch gekennzeichnet, daß der Armteil (45) in einer Bohrung der Buchse (44) verschiebbar und mittels einer Schraube (52) festlegbar ist.

25. Vorrichtung nach einem der vorhergehenden Ansprüche, dadurch gekennzeichnet, daß auf dem Armteil (45) eine Buchse (46) frei schwenkbeweglich befestigt ist, die eine Bohrung (51) aufweist, welche die Halteeinrichtung (49) für die Schneideinrichtung (1) aufnimmt.

26. Vorrichtung nach einem der vorhergehenden Ansprüche, dadurch gekennzeichnet, daß die Halteeinrichtung (49) und damit die Schneideinrichtung (1) in der Buchse (46) verschiebbar angeordnet und mittels einer Schraube (48) festlegbar ist.

27. Vorrichtung nach einem der vorhergehenden Ansprüche, dadurch gekennzeichnet, daß die Buchse (46) eine weitere Bohrung (51) zur Aufnahme des Rohres der Halterung (49) aufweist.

# FIG.1

# FIG.2

**FIG.3**

**FIG.4**

FIG.5

FIG.6

FIG.7

FIG. 8

FIG. 9

FIG.10

FIG. 11

4

3

41

43

52

42

45

44

1

46

45

47

50

51

FIG. 12

FIG. 13

47

48

49

49

46